# EUROPEAN PATENT APPLICATION

(11) **EP 0 681 359 A1**
(43) Date of publication of application: **08.11.1995**
(21) Application number: 95106315.5
(22) Date of filing: 27.04.1995
(51) Int. Cl.: H02K 7/116

(54) **An electromechanical actuator having a supporting and containing housing**

(30) Priority: 05.05.1994 IT TO940091 U
(71) Applicant: BITRON S.p.A., I-10095 Grugliasco (Torino) (IT)
(72) Inventor: Petrone, Alberto, I-10095 Grugliasco (TO) (IT); Gariglio, Giovanni, I-13051 Biella (VC) (IT); Macagno, Claudio, I-10095 Grugliasco (TO) (IT)
(74) Representative: Lotti, Giorgio

(57) **Abstract**

The electromechanical actuator comprises a direct current electric motor (5) connected to a driving system comprised between an input shaft (15) and an output shaft (35), a printed circuit (8) supporting electronics (7), a containing housing composed of two half-shells. One of the half-shells is an upwardly open base (2) supporting all the components of the actuator.

## Description

The present invention relates to an electromechanical actuator, particularly for use with air conditioning and/or heating assemblies providing recirculation, supply and mixing operations. The actuator has particularly restrained overall dimensions and weight and is adapted for automatic assembly.

At present, actuators of this kind are composed of five main elements: a direct current electric motor, a speed reducer, a printed circuit supporting electronics, a connector and a supporting and containing housing.

Typically, rotation speed reduction systems are located within their housings, which should have small size. The maximum overall dimensions are often predetermined by the manufacturer.

There is a problem concerning noise dampening. Noise level must be particularly low owing to continuous improvements in the deadening of the passenger's cabin. This renders plastic compulsory for gear construction.

There are known actuators making use of a worm screw coupled to a helical toothed gear both for the first motor output stage and the second driving stage of the actuator's output shaft. While taking up very little space, this solution provides a wide range of gear ratio and applications.

The provision of a worm screw-helical toothed gear coupling causes axial thrusts to the gear. With an aim to improve the reducer's mechanical efficiency, said thrusts have to be contrasted efficiently in order to limit friction deriving therefrom as much as possible. As known, mechanical efficiency is normally low with the two worm screw arrangement.

These actuators are actually assembled manually owing to the accuracy required for positioning the components, and due to problems with mounting to the supporting housing. Also, problems arise for the absence of a design allowing automatic assembly.

The above discussed problems contribute to keep manufacturing expenses of such actuators high. The number of this kind of actuators being employed is increasingly higher. Therefore, it would be highly desirable to cut down manufacturing costs to keep their price competitive.

Accordingly, it is an object of the present invention to provide an actuator of the above discussed type which is capable of resolving the cited problems. Besides being constructed with lower expenses, the actuator of the invention maintains high standard quality concerning reliability and mechanical strength.

To meet the above and other objects, the invention provides an actuator as claimed in claim 1.

In order that the present invention may be well understood there will now be described a preferred embodiment thereof, given by way of example, reference being made to the accompanying drawings, in which:
- FIG. 1: is a partially sectioned exploded view of the actuator of the present invention;

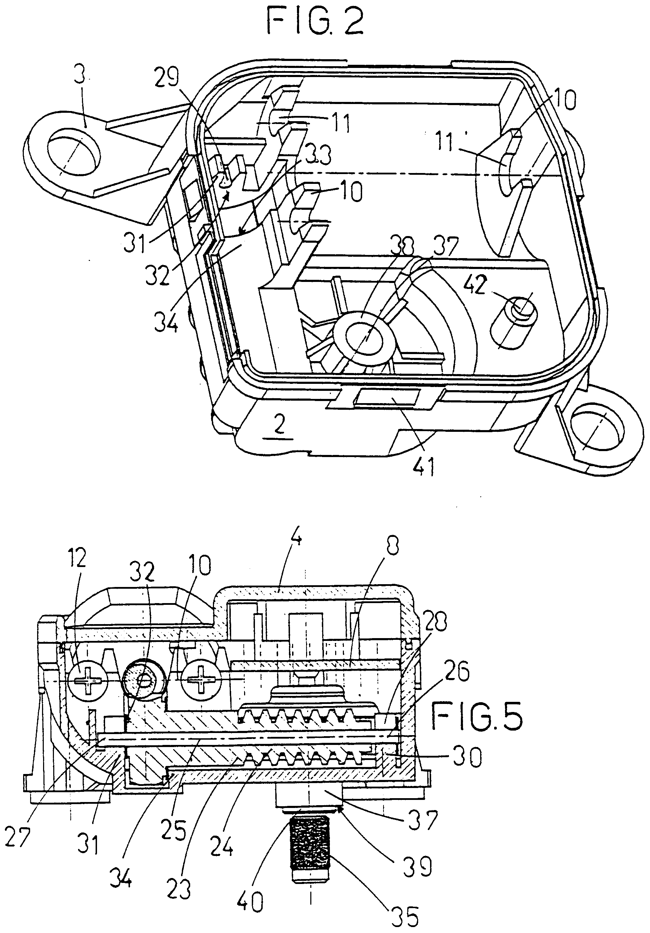

- FIG. 2: is a perspective view of a portion of the housing of the actuator of FIG. 1;

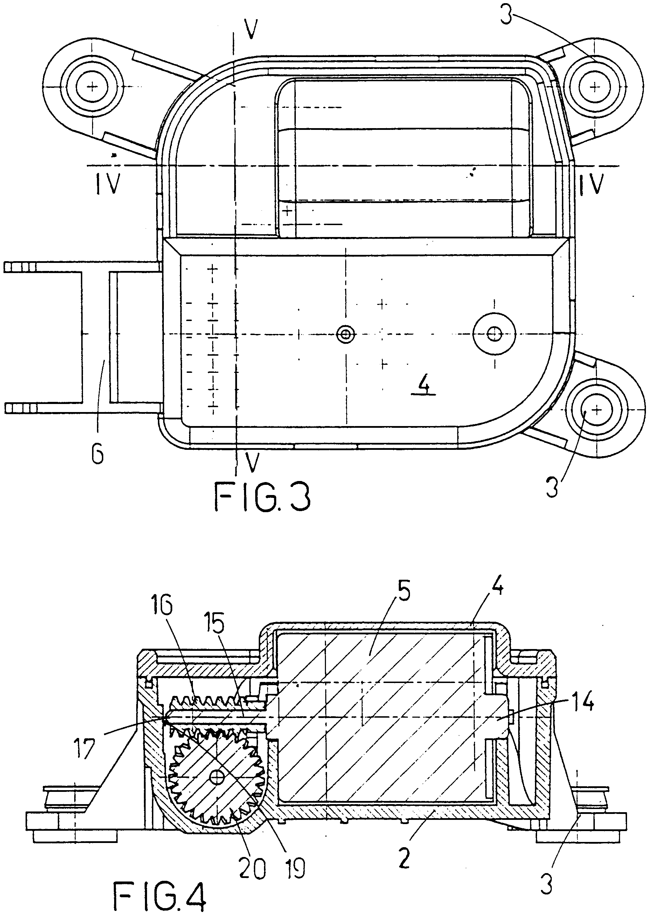

- FIG. 3: is a plan view of the actuator according to the invention, the actuator being provided with all of its parts;
- FIG. 4: is cross-section taken along line IV-IV of FIG. 3; and
- FIG. 5: is cross-section taken along line V-V of FIG. 3.

With reference to the drawings, numeral 1 designates a housing of the actuator device. The housing is of non-metallic material, typically plastic, and is composed of two half-shells: an upwardly open base 2 having outer seats 3 for fixing to the unit to be controlled, and a cover 4.

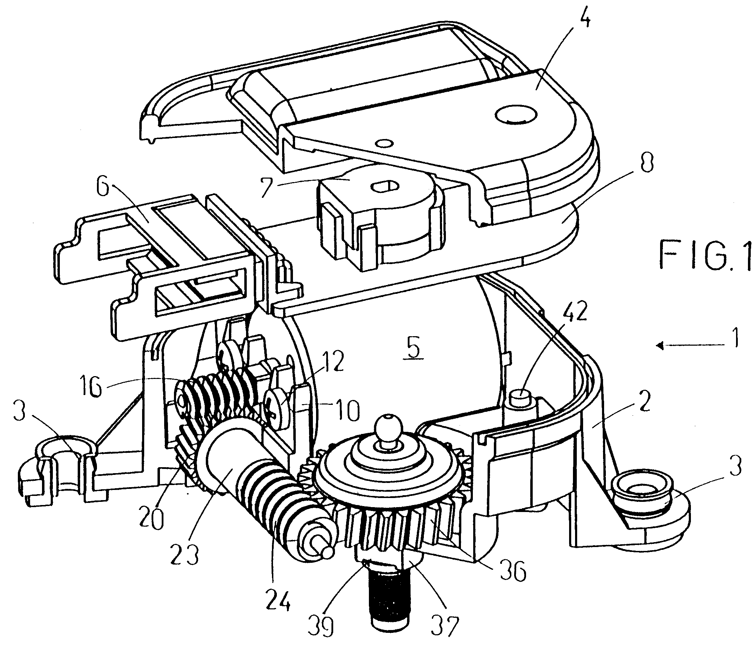

In order to facilitate as much as possible automatic assembly of the components of the actuator of this invention, as shown in FIG. 1 both the motor 5 and the drive assembly components are located within the base 2 by means of suitable fasteners, described herein after. Only the electric connector 6 and the position sensor 7 for setting the device and part of the protruding portion of motor 5 are partially accommodated within the cover 4. Connector 6 and sensor 7 are both supported by the printed circuit 8.

Particularly, tongues 10 having quick coupling seats 11 are provided within the base 2. In this example three tongues are provided. Said tongues with seats 11 are so located on the base 2 as to clamp two diametrically opposed screws 12 previously fixed to the front of the motor 5, and an axial protrusion 14 obtained on the rear portion of the motor 5. In this way, the motor 5 is quickly and precisely fixed to the base by simply exerting a slight downwardly directed pressure thereupon. The exact axial position is determined by the front tongues 10 which will be comprised between the body 14 of motor 5 and the heads of screws 12.

A worm screw 16 is interference fixed to the shaft 15 of motor 5. The fixing point is chosen so as to leave the head of spherical head 17 of shaft 15 extending from the front surface of screw 16. Axial thrusts tending to withdraw the shaft from the motor are contrasted by said head 17 which abuts a thrust supporting surface formed by a wall 19 being an integral part of base 2.

The contrasting surface is theoretically punctiform and certainly smaller than the annular surface of the front bushing (not shown) of the motor.

Said contrast acts as a mechanical security as it limits the locking torque exerted by the motor. As will be apparent, this torque is transmitted by the threads and the teeth of the first gear. In the other direction of rotation, axial thrusts acting in the opposite way will be balanced by the axial support 14 integrated within the rear portion of motor 5.

Worm screw 16 on shaft 15 engages a helical-toothed gear 20 which is part of a hollow shaft 23 having an end portion provided with a worm screw 24. Hollow shaft 23 is perpendicular to the vertical plane and the axis of the motor 5 and is idly mounted to a calibrated pin 25. Pin 25 has end portions 26, 27 secured to respective quick coupling seats respectively fitted to tongues 30, 31 obtained integral with the base 2.

As for the previously described fixing of the motor 5, also in this case a slight downwardly directed pressure will be sufficient to mount the hollow shaft 23 in the preset position precisely. Resistance to axial thrusts, which also in this case act in either way according to the direction of rotation of the motor, is provided on one side by the front wall 32 of tongue 31 and on the other side by a U-shaped projection 34 also obtained in the base 2. With an aim to reduce friction between the base 2 and the shaft 23, one or more washers of anti-friction material can be interposed between the wall of the tongue 31 and the wall 33 of the projection 34 opposed thereto.

As axial clearance of shaft 23 influences the angular clearance of the output shaft 35. As the components are of plastic, it is necessary to reduce the distance between said facing walls 31 and 32 as much as possible to limit the relevant tolerance.

Still with an aim to fit everything on the base 2 without having to provide intermediate supports or mounting covers, the output shaft 35 has only one bearing 37 having an elongated guiding length and both radial and axial functions. The axial function is demanded to the front surfaces 38, 39 of the bearing 37. Interference fitted onto shaft 35 is the second toothed gear 36 coupled to the worm screw 24 of hollow shaft 23. Said surfaces 38, 39 respectively contact the toothed gear 36 and a collar 40 integral with shaft 35. The height of the bearing from the bottom of the base 2 is greater than that of the axle of pin 25, so as to reduce bending stress caused by driving forces between the toothed gear 36 and the second worm screw 24.

Still in order to allow automatic assembly, the printed circuit 8 is mounted from above and is laid on one side on a pin 42 obtained in the base, and on the other side on the edge of the same base where the circuit has its output with connector 6. The unit comprising the printed circuit 8, the connector 6 and the position sensor 7 is kept in position by cover 4, which is snap mounted to the base 2 through hooks 41 by an operation that can be carried out automatically.

As apparent, the various assembly phases consist of first inserting the output shaft 35 from below and then fixing the toothed gear 36 thereto. From this moment on, all operations can be carried out automatically from above. Firstly, the shaft 23 is positioned in snap seats 28, 29, and then the motor 5 is inserted in the special seats 11. Then, printed circuit 8 is mounted provided with its devices, and finally the cover is inserted retained by snap hooks 41. Typically, embodiments are provided where the printed circuit has only electronic components for certain applications, while other embodiments have a printed circuit with the tracks of a switch having its output brushes integral with the output shaft.

Evidently, all assembly operations of the actuator are considerably simplified due to the particular arrangement of the base 2, thereby cutting down manufacturing expenses.

## Claims

1. An electromechanical actuator of the type comprising a direct current electric motor (5) connected to driving means consisting of two toothed gear and worm screw couplings (16, 20; 24, 36) comprised between an input shaft (15) and an output shaft (35), a printed circuit (8) supporting electronics (7), an electric connector (6) and a containing and supporting housing composed of two half-shells consisting of an upwardly open base (2) and a cover (4), characterised in that the electric motor (5) and the driving means (15, 16, 20, 24, 36, 35) are supported and retained by means (10, 30, 31, 37) obtained integral with the base (2) of the housing.

2. An electromechanical actuator as claimed in claim 1, characterised in that part of said retaining and supporting means (10, 30, 31, 37) is constituted by tongues (10, 30, 31) provided with snap fitting seats (11, 28, 29).

3. An electromechanical actuator as claimed in claim 2, characterised in that said seats (11, 28, 29) are facing towards the upper open part of the base (2).

4. An electromechanical actuator as claimed in claim 1, characterised in that part of said retaining and supporting means (10, 30, 31, 37) consists of a cylindrical seat (37) for an output shaft (35) of said driving means (15, 16, 20, 24, 36, 35), said seat being obtained integral with and perpendicular to the base (2).

5. An electromechanical actuator as claimed in claim 1, characterised in that said base (2) is provided with walls (19, 32, 33, 38, 39) for containing axially said driving means (15, 16, 20, 24, 36, 35), said walls being obtained integral with said base (2).

6. An electromechanical actuator as claimed in claims 1 and 2, characterised in that the electric motor (5) is provided with snap fitting means (12, 14), two of which being located diametrically opposed on the front part, and one being located on the rear part in an axial position.

7. An electromechanical actuator as claimed in claim 1, characterised in that the base (2) is provided with hooks (41) for snap mounting of the cover (4).

8. An electromechanical actuator as claimed in claim 1, characterised in that the base (2) is provided with means for supporting the printed circuit (8).
